# EUROPEAN PATENT APPLICATION

(11) **EP 1 686 640 A1**
(43) Date of publication of application: **02.08.2006**
(21) Application number: 06100817.3
(22) Date of filing: 25.01.2006
(51) Int. Cl.: H01M 4/66, H01M 4/04, H01M 4/86, H01M 4/90

(54) **Diffusion layer for an electrode of a fuel cell system**

(30) Priority: 26.01.2005 KR 2005007017; 25.03.2005 KR 2005024862
(71) Applicant: Samsung SDI Co., Ltd., Suwon-si Gyeonggi-do (KR)
(72) Inventor: LEE, Jong-Ki, Kyunggi-do (KR); KIM, Jan-Dee, Kyunggi-do (KR); CHO, Sung-Yong, Kyunggi-do (KR); AN, Seong-Jin, Kyunggi-do (KR); EUN, Yeong-Chan, Kyunggi-do (KR)
(74) Representative: Hengelhaupt, Jürgen

(57) **Abstract**

The invention relates to diffusion layer for an electrode of a fuel cell system as well as to an electrode, a membrane-electrode assembly and a fuel cell system comprising the same. According to the invention the diffusion layer comprises an electrode substrate having a skeleton structure and a conductive powder uniformly dispersed across the skeleton structure.

## Description

### FIELD OF THE INVENTION

The invention relates to diffusion layer for an electrode of a fuel cell system as well as to an electrode, a membrane-electrode assembly and a fuel cell system comprising the same. The invention relates to an electrode for a fuel cell capable of reducing mass transfer resistance which results in the improvement of cell efficiency, a membrane-electrode assembly and a fuel cell system comprising the same.

### BACKGROUND OF THE INVENTION

A fuel cell is a power generation system for producing electrical energy through the electrochemical redox reaction of an oxidant and a fuel such as hydrogen, or a hydrocarbon-based material such as methanol, ethanol, natural gas, or the like.

Representative exemplary fuel cells include polymer electrolyte membrane fuel cells (PEMFC) and direct oxidation fuel cells (DOFC). The direct oxidation fuel cells include a direct methanol fuel cell which uses methanol as a fuel.

The polymer electrolyte fuel cell is an environmentally-friendly energy source useful for replacing a conventional energy source. It has advantages such as high power output density and energy conversion efficiency, operability at room temperature, and being down-sized and closely sealed. Therefore, it can be applicable to a wide array of fields such as non-polluting automobiles, electricity generation systems, and portable power sources for mobile equipment, military equipment, and the like.

The polymer electrolyte fuel cell has an advantage of high energy density, but it also has problems like the need to carefully handle hydrogen gas, and requiring accessory facilities, such as a fuel reforming processor, for reforming methane or methanol, natural gas, and the like in order to produce hydrogen as the fuel.

On the contrary, a direct oxidation fuel cell has a lower energy density than that of the gas-type fuel cell, but it has the advantages of easy handling of the liquid-type fuel, a low operation temperature, and no need for additional fuel reforming processors. Therefore, it has been acknowledged as an appropriate system for a portable power source for small and common electrical equipment.

In the above fuel cell system, the stack that generates electricity substantially includes several unit cells stacked in multi-layers, and each unit cell includes a membrane-electrode assembly (MEA) and a separator (also referred to as a bipolar plate). The membrane-electrode assembly has an anode (also referred to as a fuel electrode or an oxidation electrode) and a cathode (also referred to as an air electrode or a reduction electrode) attached to each other with an electrolyte membrane between them.

The separators not only work as passageways for supplying the fuel required for the reaction to the anode and for supplying oxygen to the cathode, but also as conductors serially connecting the anode and the cathode in the membrane-electrode assembly. The electrochemical oxidation reaction of the fuel occurs at the anode and the electrochemical reduction reaction of oxygen occurs at the cathode, thereby producing electricity, heat, and water due to the migration of the electrons generated during this process.

### SUMMARY OF THE INVENTION

According to a first aspect of the invention there is provided a diffusion layer for an electrode of a fuel cell. The diffusion layer comprises an electrode substrate having a skeleton structure and a conductive powder which is uniformly dispersed across the skeleton structure.

According to a second aspect of the invention there is provided an electrode capable of reducing mass transfer resistance resulting in improvement of the fuel cell efficiency. The electrode comprises the above-mentioned diffusion layer and a catalytic layer formed on the diffusion layer. A diffusion layer of the conventional art comprises a microporous layer and backing layer. Since the diffusion layer of the present invention does not further include both layers, the electrode may be thinner than that of the conventional art.

According to a third aspect of the invention there is provided a membrane-electrode assembly including the above electrode.

According to a fourth aspect of the present invention there is provided a fuel cell system which includes the above membrane-electrode assembly.

According to one embodiment of the present invention, an electrode for a fuel cell includes a diffusion layer and a catalyst layer formed on the diffusion layer. The diffusion layer includes a conductive powder uniformly dispersed on the surface and inside thereof.

According to another embodiment of the invention, a membrane-electrode assembly includes an anode and a cathode facing each other and a polymer electrolyte membrane positioned between the anode and cathode. At least one of the anode and the cathode includes a diffusion layer and a catalyst layer formed on the diffusion layer. The diffusion layer includes a conductive powder uniformly dispersed on the surface and inside thereof.

According to yet another embodiment of the invention, a fuel cell system includes at least one electricity generating element generating electricity through an electrochemical reaction of a fuel and an oxidant, a fuel supplier for supplying a fuel to the electricity generating element, and an oxidant supplier for supplying an oxidant to the electricity generating element. The electricity generating element includes at least one membrane-electrode assembly which includes an anode and a cathode facing each other and a polymer electrolyte membrane interposed therebetween, and separators positioned at both sides thereof. At least one of the anode and the cathode includes a diffusion layer and a catalyst layer formed on the diffusion layer. The diffusion layer includes a conductive powder uniformly dispersed on the surface and inside thereof.

The conductive powder may be dispersed in the diffusion layer with uniform distribution.

The diffusion layer may include a conductive powder and an electrode substrate which is composed of carbon fibers. The conductive powder is coated on the carbon fibers.

The diffusion layer may include a conductive powder and a fluorinated resin uniformly dispersed on the surface and inside thereof.

The catalyst layer may be formed by deposition.

### BRIEF DESCRIPTION OF THE DRAWINGS

FIG. 1 is a cross-sectional view showing a diffusion layer according to one embodiment of the invention.
FIG. 2 is a schematic diagram illustrating one embodiment of a fuel cell system of the invention.
FIG. 3 is a graph illustrating current-voltage characteristics of fuel cells according to Examples 1 and 3.
FIG. 4 is a graph illustrating current-power characteristics of fuel cells according to Examples 1 and 3.

### DETAILED DESCRIPTION OF THE INVENTION

Generally, an electrode for a fuel cell includes a diffusion layer and a catalyst layer where oxidation of a fuel or reduction of an oxidant occurs.

The diffusion layer diffuses a fuel and an oxidant into a catalyst layer. A diffusion layer of conventional art generally includes a backing layer and a microporous layer coated on the backing layer. The catalyst layer is coated on the microporous layer.

However, although this conventional structure is capable of uniformly diffusing a fuel and an oxidant, it still has the problem of causing mass transfer resistance due to the big discrepancy in the pore size and porosity of the electrode substrate and the microporous layer. Therefore, the problem leads to a non-uniform supply of fuels and oxidants.

In addition, the diffusion layer is subject to water-repellent treatment before forming the microporous layer so that water generated during fuel cell operation clogs pores of the diffusion layer, resulting in complication of the fabrication processes of an electrode.

According to the invention there is provided a modified diffusion layer for an electrode of a fuel cell. The diffusion layer comprises an electrode substrate having a skeleton structure; and a conductive powder uniformly dispersed across the skeleton structure. Preferable, the conductive powder is coated on the skeleton structure.

Uniformly dispersed means, the amount of conductive powder in a certain volume of the electrode substrate only differs slightly over the total volume of the electrode substrate. More precisely, the amount of the conductive powder being coated on certain surface area of the skeleton structure and/or the amount of the conductive powder being dispersed within the pores of a certain volume of the skeleton structure is nearly constant of the total skeleton structure. Preferable, the deviation of the amount of the conductive powder over the volume / surface area of the total skeleton structure is less then 30 %, more preferable less then 20 %, most preferred less then 10 %.

One embodiment of the invention provides an electrode for a fuel cell comprising a diffusion layer, which includes a conductive powder and an electrode substrate, and a catalyst layer formed thereon, wherein the diffusion layer includes a conductive powder uniformly dispersed on the surface and inside thereof.

According to one embodiment, the skeleton structure of the electrode substrate comprises carbon fibers, and the conductive powder is coated on the carbon fibers.

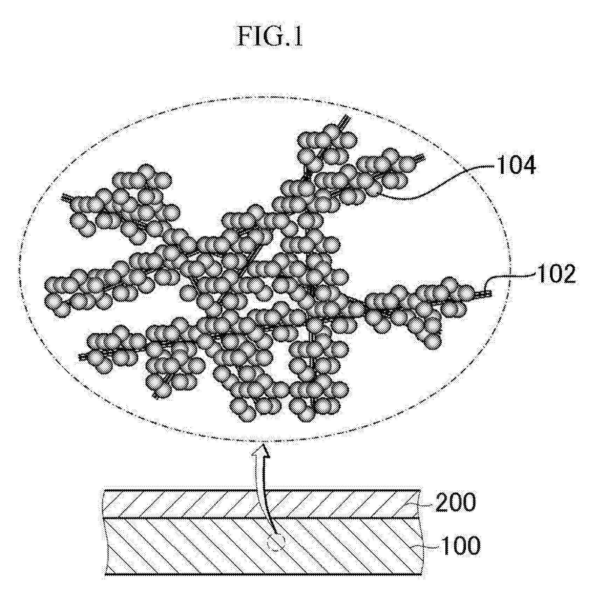

FIG. 1 is a cross-sectional view showing a diffusion layer. As shown in FIG. 1, a diffusion layer 100, respectively an electrode for a fuel cell is prepared by coating a conductive powder 104 on skeleton structure 102 of the electrode substrate. In alternative or supplementary, the conductive power 104 could be disposed within the pores of the skeleton structure 102 of the electrode substrate. Accordingly, the diffusion layer 100 can have a uniform porosity and pore size and reduced mass transfer resistance in comparison to conventional diffusion layers.

A skeleton structure according to the invention is a structure having a sufficient pore size for distribution of the reaction gas/liquid and humidity. Further, the structure is adapted for electron heat transport (i.e. it has a proper thermal conductivity), corrosion stability (i.e. it has a sufficient surface stability and purity) and, preferable, electron transport (i.e. it has a sufficient electrical conductivity). Preferable, the diffusion layer for the electrode of a fuel cell comprises a skeleton structure for the electrode substrate, which is selected from the group consisting of carbon fiber, carbon cloth and carbon paper, and combinations thereof, but not limited thereto. Carbon fiber refers to carbon filaments, wherein each carbon filament is made out of long carbon.

Non-limiting examples of the conductive powder 104 include carbon powder, carbon black, activated carbon, acetylene black, ketjen black, nano-carbon, and mixtures thereof. The nano-carbon may include a material such as carbon nanotube, carbon nanofiber, carbon nanowire, carbon nanohorn, carbon nanoring, or combinations thereof.

Preferable, the diffusion layer further comprises a fluorinated resin coated with the conductive powder on the skeleton structure. The conductive powder 104 can be mixed and coated with the fluorinated resin which acts as a water-repellent, in order to prevent water generated during the operation of a fuel cell from sealing pores, and thereby facilitating the smooth diffusion of the fuels and oxidants.

The conductive powder and fluorinated resin may be dispersed in a weight ratio ranging from 30 to 70 : 70 to 30, preferably 40 to 60 : 60 to 40. When the amount of conductive powder is less than 30wt%, it is difficult to form uniform pores for easy diffusion of reactants in the diffusion layer, whereas when it is more than 70wt%, detachment of the conductive powder occurs.

Such a diffusion layer may be fabricated by adding a conductive powder in a water-repellent composition including a fluorinated resin and then surface-treating an electrode substrate. Therefore, the diffusion layer having uniform pores may be fabricated by performing a water-repellent treatment. That simplifies the fabrication process of a fuel cell electrode.

The surface-treating may include, but is not limited to, screen printing, spray coating, doctor blade methods, gravure coating, dip coating, silk screening, painting, and so on, depending on the viscosity of the composition. Dip coating is preferred.

The fluorinated resin may include, but is not limited to, polytetrafluoroethylene, polyvinylidene fluoride, polyhexafluoropropylene, polyvinylidene fluoride-co-hexafluoropropane, polypertluoroalkylvinylether, polyperfluorosulfonylfluoridealkoxyvinylether, copolymers thereof, and mixtures thereof. In another embodiment, the solvent may include, but is not limited to, an alcohol such as ethanol, isopropyl alcohol, ethyl alcohol, n-propyl alcohol, and butyl alcohol; water; dimethylacetamide (DMAc); dimethyl formamide, dimethyl sulfoxide (DMSO); N-methylpyrrolidone; tetrahydrofuran, and combinations thereof. Preferable, the solvent used is a mixture of alcohol and water.

The diffusion layer has a thickness ranging from 100 to 600 µm, and preferably from 200 to 400 µm. When the thickness of the diffusion layer is more than 600 µm, mass transfer resistance becomes large, whereas when it is less than 100 µm, diffusion does not occur uniformly. Since the electrode of the present invention does not further include a microporous layer, the electrode may be thinner than that of the conventional art.

Preferable, the diffusion layer has porosity from 65% to 95 %, more preferred from 65% to 85 %, and most preferred 70% to 80%. When the porosity is more than 95%, diffusion does not occur uniformly, whereas when it is less than 65 %, mass transfer resistance becomes large.

The diffusion layer includes pores disposed with a uniform distribution.

A catalyst layer 200 is formed by coating the diffusion layer 100 with a composition including a catalyst, binder and ionomer as needed. The coating process is well known and therefore it is not described in detail.

The catalyst layer 200 includes a metal catalyst to help the oxidation of the fuel and reduction of the oxidant, and typically the metal catalyst includes a platinum-based catalyst. The metal catalyst may include at least one metal/alloy selected from the group consisting of platinum, ruthenium, osmium, platinum-ruthenium alloys, platinum-osmium alloys, platinum-palladium alloys, platinum-M alloys, (where M is at least one transition element selected from the group consisting of Ga, Ti, V, Cr, Mn, Fe, Co, Ni, Cu, Zn and mixtures thereof), and combinations thereof. In another embodiment, the catalysts are selected from the group consisting of platinum, ruthenium, osmium, platinum-ruthenium alloys, platinum-osmium alloys, platinum-palladium alloys, platinum-cobalt alloys, platinum-nickel alloys, and combinations thereof.

The catalyst may be supported on a carrier or may be unsupported. Examples of carriers useful in one embodiment of the invention include carbon, such as acetylene black, graphite, inorganic particulates such as alumina, silica, zirconia, titania, and combinations thereof. In another embodiment, when the catalyst is a noble metal supported with a carrier, it may include one of those commercially available that are already provided with a carrier, or be prepared by supporting the noble metal on a carrier. Since the process to support the noble metal on a carrier is known to the art, it is omitted from this description.

The catalyst layer 100 may be formed by deposition of a catalytic metal such as by sputtering, or by evaporation including thermal evaporation or electron beam evaporation. When using deposition, a more uniform thin layer may be formed rather than using a wet-coating manner. The catalyst layer formed by deposition includes a large amount of catalytic metals which are present near to an electrolyte membrane. Thereby, the problem of catalyst layers formed by a wet-coating manner that the catalyst layer is thicker, and thereby catalytic metals far from the electrolyte membrane do not participate in the reaction can be solved.

The invention also provides a membrane-electrode assembly which includes an electrode for a fuel cell with a diffusion layer which is described above.

The membrane-electrode assembly includes an anode and a cathode facing each other and a polymer electrolyte membrane positioned between the anode and cathode.

The electrode can be either one of an anode performing oxidation of a fuel, or a cathode performing reduction of an oxidant.

The polymer electrolyte membrane may include a proton conductive polymer which has the function of transporting protons generated at a catalyst layer of the anode to a catalyst layer of the cathode.

The proton conductive polymer may be a polymer resin having a cation exchange group selected from the group consisting of sulfonic acid groups, carboxylic acid groups, phosphoric acid groups, phosphonic acid groups, derivatives thereof at its side chain, and combinations thereof.

Non-limiting examples of the polymer includes at least one proton conductive polymer selected from the group consisting of perfluoro-based polymers, benzimidazole-based polymers, polyimide-based polymers, polyetherimide-based polymers, polyphenylenesulfide-based polymers polysulfone-based polymers, polyethersulfone-based polymers, polyetherketone-based polymers, polyether-etherketone-based polymers, polyphenylquinoxaline-based polymers, and combinations thereof. In one embodiment, the proton conductive polymer is at least one selected from the group consisting of poly(perfluorosulfonic acid), poly(perfluorocarboxylic acid), a copolymer of tetrafluoroethylene and fluorovinylether having sulfonic acid groups, defluorinated polyetherketone sulfide, aryl ketone, poly (2,2'-(m-phenylene)-5,5'-bibenzimidazole), poly (2,5-benzimidazole), and combinations thereof. In an embodiment, typically the polymer electrolyte membrane thickness ranges from 10 to 200 µm.

The present invention also provides a fuel cell system which includes the membrane-electrode assembly described above.

The fuel cell system includes at least one electricity generating element generating electricity through the electrochemical reaction of a fuel and an oxidant, a fuel supplier for supplying a fuel to the electricity generating element, and an oxidant supplier for supplying an oxidant to the electricity generating element.

An embodiment includes an electricity generating element comprising a membrane-electrode assembly as described above and a separator.

The separator may include a flow channel and a cooling channel for supplying a fuel and an oxidant to a membrane-electrode assembly.

The fuel supplier plays a role of supplying the electricity generating element with a fuel including hydrogen, and the oxidant supplier plays a role of supplying the electricity generating element with oxidant. The fuel includes liquid or gaseous hydrogen or a hydrocarbon fuel such as methanol, ethanol, propanol, butanol, or natural gas, and the oxidant includes oxygen or air.

The fuel cell system can be applied to a polymer electrolyte membrane fuel cell (PEMFC) or a direct oxidation fuel cell (DOFC), and preferably to DOFC using a liquid fuel.

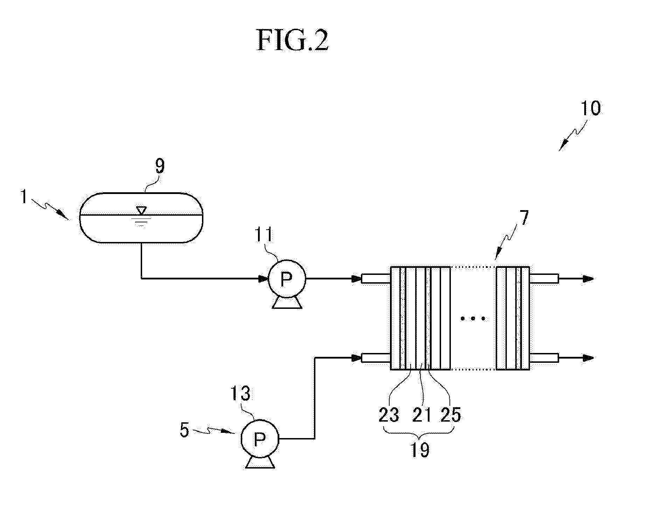

FIG. 2 shows a schematic structure of a fuel cell system, according to one embodiment of the invention, which will be described in detail with reference to the accompanying drawing as follows.

FIG. 2 shows an embodiment of the invention including a structure which supplies a fuel and an oxidant into an electricity generating element by using a pump. However, the invention is not limited thereto but can be applied to a structure without a pump.

A fuel cell system 10 includes a stack 7 composed of at least one electricity generating element 19 which generates electrical energy through the electrochemical reaction of a fuel and an oxidant, a fuel supplier 1 for supplying a fuel to the electricity generating element 19, and an oxidant supplier 5 for supplying oxidant to the electricity generating element 19.

The fuel supplier 1 is equipped with a tank 9, which stores fuel, and a pump 11, which is connected therewith. The fuel pump 11 supplies fuel stored in the tank 9 at a predetermined pressure and flowrate.

The oxidant supplier 5, which supplies the electricity generating element 19 of the stack 7 with an oxidant, is equipped with at least one pump 13 drawing in an oxidant with a predetermined pressure and flowrate.

The electricity generating element 19 includes a membrane-electrode assembly 21, which oxidizes hydrogen or a fuel, and reduces an oxidant, and separators (bipolar plates) 23 and 25 at both sides thereof, which can supply hydrogen or a fuel, and an oxidant respectively.

The following examples illustrate embodiments of the invention in more detail. However, it is understood that the invention is not limited by these examples.

### Example 1

Carbon powders and polytetrafluoroethylene were mixed in a weight ratio of 40 : 60 in a solvent made from water and isopropyl alcohol to prepare a conductive water-repellent composition. Then, a carbon paper was dipped in the composition to fabricate a diffusion layer. The resulting diffusion layer has porosity of 78%.

A catalyst layer was formed by coating a catalyst slurry on the fabricated diffusion layer to fabricate an electrode for a fuel cell. The catalyst slurry was prepared by mixing platinum supported on carbon powder (Pt/C), a polytetrafluoroethylene polymer and a solvent containing water and isopropyl alcohol.

The electrode was used for an anode and a cathode and NAFION™ (perfluorosulfonic acid) polymer electrolyte membrane was interposed therebetween. Then, a pressure of 200 kgf/cm² was applied for 3 minutes at 200°C to fabricate a membrane-electrode assembly.

The resultant membrane-electrode assembly was inserted between two sheets of gaskets and inserted into two separators formed with a pathway channel and a cooling channel of a certain shape. Then, it was pressed between copper end plates to provide a unit cell.

### Example 2

Carbon powders and polytetrafluoroethylene were mixed in a weight ratio of 45 : 65 in a solvent made from water and isopropyl alcohol to prepare a conductive water-repellent composition. Then, a carbon paper was dipped in the composition to fabricate a diffusion layer. The resulting diffusion layer has porosity of 75%.

Using the diffusion layer, a unit cell was fabricated according to the same method as in Example 1

### Example 3

Carbon powders and polytetrafluoroethylene were mixed in a weight ratio of 25 : 75 in a solvent made from water and isopropyl alcohol to prepare a conductive water-repellent composition. Then, a carbon paper was dipped in the composition to fabricate a diffusion layer. The resulting diffusion layer has porosity of 60%.

Using the diffusion layer, a unit cell was fabricated according to the same method as in Example 1

For the fuel cell fabricated according to Examples 1 and 3, 0.5M methanol and oxygen (O₂) gas were supplied, and then the voltage and current density of the fuel cell was measured while operating at 70 °C.

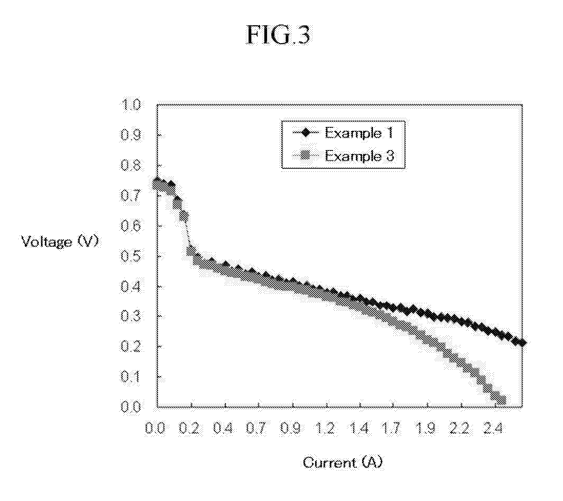

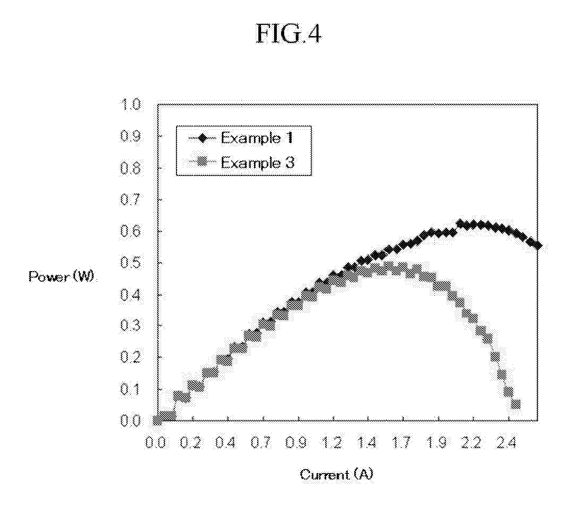

FIGS. 3 and 4 are respectively graphs illustrating current-voltage and current-power characteristics of fuel cells according to Examples 1 and 3. As shown in FIGS. 3 and 4, the fuel cell of Example 1 showed high voltage and power at high current while the fuel cell of Example 3 showed significantly large voltage drop and power drop. These results are caused by the fact that the diffusion layer of Example 3 has a high mass transfer resistance compared to that of Example 1.

## Claims

1. A diffusion layer for an electrode of a fuel cell comprising:
an electrode substrate having a skeleton structure; and
a conductive powder uniformly dispersed across the skeleton structure.

2. The diffusion layer of claim 1, wherein the conductive powder is coated on the skeleton structure.

3. The diffusion layer of claim 1, wherein the conductive powder is selected from the group consisting of carbon powder, carbon black, activated carbon, acetylene black, ketjen black, nanocarbon, and mixtures thereof.

4. The diffusion layer according to any of the preceding claims, wherein the diffusion layer further comprises a fluorinated resin coated with the conductive powder on the skeleton structure.

5. The diffusion layer of claim 4, wherein the fluorinated resin is selected from the group consisting of polytetrafluoroethylene, polyvinylidene fluoride, polyhexafluoropropylene, polyvinylidenefluoride-co-hexafluoropropane, polyperfluoroalkylvinylether, polyperfluorosulfonylfluoridealkoxyvinylether, copolymers thereof, and combinations thereof.

6. The diffusion layer according to any of the preceding claims, wherein the skeleton structure of the electrode substrate is selected from the group consisting of carbon fiber, carbon cloth, carbon paper, and combinations thereof.

7. The diffusion layer of claim 1, wherein the diffusion layer thickness ranges from 100 to 600 µm.

8. The diffusion layer of claim 7, wherein the diffusion layer thickness ranges from 200 to 400 µm.

9. The diffusion layer of claim 1, wherein the diffusion layer porosity ranges from 70 to 95 %.

10. The diffusion layer of claim 9, wherein the diffusion layer porosity ranges from 80 to 90 %.

11. An electrode for a fuel cell comprising
a diffusion layer according to any of the claims 1 to 10; and
a catalyst layer formed on the diffusion layer.

12. A membrane-electrode assembly for a fuel cell comprising:
an anode and a cathode facing each other, wherein at least one of the anode and the cathode is an electrode according to claim 11, and
a polymer electrolyte membrane interposed therebetween.

13. A fuel cell system comprising:
at least one electricity generating element comprising at least one membrane-electrode assembly according to claim 12 and separators positioned at both sides thereof;
a fuel supplier supplying the electricity generating element with a fuel; and
an oxidant supplier supplying the electricity generating element with an oxidant.

14. The fuel cell system of claim 13, wherein the fuel cell system is selected from the group consisting of a polymer electrolyte membrane fuel cell (PEMFC) and a direct oxidation fuel cell (DOFC).
